# EUROPÄISCHE PATENTANMELDUNG

(11) **EP 4 763 760 A1**
(43) Veröffentlichungstag der Anmeldung: **24.06.2026**
(21) Anmeldenummer: 25183736.5
(22) Anmeldetag: 18.06.2025
(51) Int. Cl.: B65G 47/88, B23Q 1/26

(54) **ANSCHLAGMODUL**

(30) Priorität: 19.12.2024 DE 102024138975
(71) Anmelder: Asutec GmbH, 72622 Nürtingen (DE)
(72) Erfinder: Unterhuber, Andreas, 73257 Köngen (DE); Pohle, Martin, 73230 Kirchheim unter Teck (DE)
(74) Vertreter: Patentanwälte Magenbauer & Kollegen Partnerschaft mbB

(57) **Zusammenfassung**

Bei einem Anschlagmodul, insbesondere für automatische Bearbeitungs- und Fördereinrichtungen, mit einem an einem Grundkörper (24) beweglich gelagerten Anschlagglied (21) für sich in einer Transportebene (13) in einer aktuellen entlang einer Bewegungsachse (15) orientierten Arbeitsbewegungsrichtung (14) bewegende Gegenstände (16), wobei das Anschlagglied (21) mittels einer einen Stellantrieb (29) aufweisenden Stellvorrichtung per Abwärtshub aus der Transportebene (13) heraus und per Aufwärtshub in diese zurückbewegbar ist, und mit einer mit dem Anschlagglied (21) gekoppelten Dämpfungseinrichtung (48) zum Dämpfen des Aufpralls eines Gegenstandes (16) auf das Anschlagglied (21), derart, dass das Anschlagglied (21) beim Aufprall des Gegenstandes (16) aus einer Anschlagglied-Ausgangsstellung (22) heraus in Richtung einer eine Weiterbewegung des Anschlagglieds (21) verhindernden Anschlagglied-Endstellung (49) gedämpft bewegbar ist, weist die Stellvorrichtung ein mit dem Stellantrieb (29) bewegungsgekoppeltes und von diesem angetriebenes mechanisches Steuerelement (50) auf, das mit einem am Anschlagglied (21) angeordneten mechanischen Gegen-Steuerelement (51) derart gekoppelt ist, dass beim Aufprall des Gegenstandes (16) der Stellantrieb (29) über Aktivierungsmittel aktivierbar ist und das mechanische Steuerelement (50) veranlasst, eine Steuerbewegung auszuführen, wodurch über den Abgriff mittels des mechanischen Gegen-Steuerelements (51) das Anschlagglied von der Anschlagglied-Ausgangsstellung (22) in die Anschlagglied-Endstellung (49) bewegbar ist.

## Beschreibung

Die Erfindung betrifft ein Anschlagmodul, insbesondere für automatische Bearbeitungs- und Fördereinrichtung, mit einem an einem Grundkörper beweglich gelagerten Anschlagglied für sich in einer Bewegungsebene in einer aktuellen entlang einer Bewegungsachse orientierten Arbeitsbewegungsrichtung bewegende Gegenstände, wobei das Anschlagglied mittels einer einen Stellantrieb aufweisenden Stellvorrichtung per Abwärtshub aus der Bewegungsebene heraus und per Aufwärtshub in diese zurückbewegbar ist, und mit einer mit dem Anschlagglied gekoppelten Dämpfungseinrichtung zum Dämpfen des Aufpralls eines Gegenstandes auf das Anschlagglied, derart, dass das Anschlagglied beim Aufprall des Gegenstandes aus einer Anschlagglied-Ausgangsstellung heraus in Richtung einer eine Weiterbewegung des Anschlagglieds verhindernden Anschlagglied-Endstellung gedämpft bewegbar ist.

Fluidbetätigbare Anschlagmodule sind bereits bekannt, beispielsweise aus der EP 0 484 648. Der dort beschriebene Anschlag ist mittels eines pneumatisch betätigbaren Stellkolbens aus der Bewegungsbahn heranfahrender Werkstücke heraus und in diese zurückbewegbar. Zur Druckluftbeaufschlagung ist am Gehäuse ein Druckluftanschluss vorgesehen, über den gesteuert Druckluft zugeführt wird. Ferner ist im Anschlag eine Dämpfungseinrichtung zugeordnet, so dass die Bewegung der anschlagenden Werkstücke abgedämpft werden kann. Das Ausfahren des Anschlagglieds von einer Endanschlagstellung in eine erste Anschlagstellung erfolgt hier ebenfalls über die gesteuert zugeführte Druckluft.

Derartige Anschlagmodule, die auch als Vereinzeler bezeichnet werden können, lassen sich prinzipiell in gedämpfte und ungedämpfte Anschlagmodule unterscheiden. Bei den ungedämpften Anschlagmodulen schlägt der in der Arbeitsbewegungsrichtung sich bewegende Gegenstand, bei dem es sich beispielsweise um einen mit Werkstücken bestückten Werkstückstückträger, beispielsweise Werkstückpalette, handeln kann, ungedämpft und hart an das in die Bewegungsebene hineinragende Anschlagglied an. Bei den gedämpften Anschlagmodulen ist eine Dämpfungseinrichtung vorgesehen, mit der die Einfahrbewegung des Anschlagglieds von der Anschlagglied-Ausgangsstellung in eine Anschlagglied-Endstellung beziehungsweise Stoppstellung abgebremst wird. Gedämpfte Anschlagmodule eignen sich insbesondere für zu vereinzelnde Gegenstände mit hohem Gewicht. In der Regel sind gedämpfte Anschlagmodule für den Gegenstand mit dem höchsten Gewicht ausgelegt, wodurch der Aufprall dieses Gegenstandes noch zuverlässig abgedämpft beziehungsweise abgebremst werden kann. Dabei wird das Anschlagglied von der Anschlagglied-Ausgangsstellung in die Anschlagglied-Endstellung bewegt. Bei solchen gedämpften Anschlagmodulen tritt jedoch das Problem auf, dass das Anschlagglied im Falle ankommender Gegenstände, die ein relativ geringes Gewicht aufweisen, ausgehend von der Anschlagglied-Ausgangsstellung nicht vollständig in die Anschlagglied-Endstellung bewegt wird, sondern zuvor abgebremst wird, wodurch das Anschlagglied vor Erreichen der Anschlagglied-Endstellung stehen bleibt. Falls das Anschlagglied durch die Gesamtenergie des ankommenden Gegenstandes nicht vollständig in die Anschlagglied-Endstellung bewegt wird, bleibt das Anschlagglied also in Abhängigkeit von der Gesamtenergie also in erster Linie abhängig vom Gewicht des ankommenden Gegenstandes irgendwo zwischen der Anschlagglied-Ausgangsstellung und der Anschlagglied-Endstellung stehen. Dies ist für das nachfolgende Handling des Gegenstandes nachteilig.

Aufgabe der Erfindung ist es daher, ein Anschlagmodul der eingangs erwähnten Art zu schaffen, bei dem das Anschlagglied beim Dämpfungs- beziehungsweise Abbremsvorgang des Gegenstandes zuverlässig in eine definierte Endlage verfahren wird, wodurch vorstehende Nachteile aus dem Stand der Technik vermieden werden.

Diese Aufgabe wird durch einen Anschlagmodul mit den Merkmalen des unabhängigen Anspruchs 1 gelöst. Weiterbildungen der Erfindung sind in den Unteransprüchen dargestellt.

Das erfindungsgemäße Anschlagmodul zeichnet sich dadurch aus, dass die Steuervorrichtung ein mit dem Steuerantrieb bewegungsgekoppeltes und von diesem angetriebenes mechanisches Steuerelement aufweist, das mit einem am Anschlagglied angeordneten mechanischen Gegen-Steuerelement derart gekoppelt ist, dass beim Aufprall des Gegenstandes der Stellantrieb über Aktivierungsmittel aktivierbar ist und das mechanische Steuerelement veranlasst, eine Steuerbewegung auszuführen, wodurch über den Abgriff mittels des mechanischen Gegen-Steuerelements das Anschlagglied von der Anschlagglied-Ausgangsstellung in die Anschlagglied-Endstellung bewegbar ist.

Durch diese Steuerbewegung ist also stets gewährleistet, dass das Anschlagglied beim Abbremsvorgang beziehungsweise Dämpfungsvorgang in die Anschlagglied-Endstellung, also in eine definierte Endstellung verfahren wird. Dies erfolgt unabhängig vom Gewicht des ankommenden Gegenstandes. Kommt also ein schwerer Gegenstand an, für den das Anschlagmodul ausgelegt ist, wird die kinetische Energie ausreichen, das Anschlagglied vollständig von der Anschlagglied-Ausgangsstellung in die Anschlagglied-Endstellung zu bewegen, ohne dass es zu einem Kontakt des Gegen-Steuerelements am Anschlagglied mit dem Steuerelement kommt. Bei leichteren Gegenständen, deren Aufprall dazu führen würde, dass das Anschlagglied zwischen der Anschlagglied-Ausgangsstellung und der Anschlagglied-Endstellung stehen bleiben würde, wird diese Situation dadurch verhindert, dass das Anschlagglied durch die Steuerbewegung, die in Kombination des mechanischen Steuerelements mit dem mechanischen Gegen-Steuerelement ausgeführt wird, in die Anschlagglied-Endstellung weiterbewegt wird. Ein Zwischenstopp zwischen den beiden Endstellungen, also der Anschlagglied-Ausgangsstellung und der Anschlagglied-Endstellung wird somit vermieden.

Bei einer Weiterbildung der Erfindung sind mechanisches Steuerelement und mechanisches Gegen-Steuerelement als Steuerbolzen und mit einer Steuerbahn für den Steuerbolzen ausgestattete Dämpfungs-Steuerkulisse ausgebildet. Die Steuerbahn kann beispielsweise als Kurvenbahn ausgebildet sein, jedoch ist dort eine linear verlaufende Steuerbahn möglich. Zweckmäßigerweise ist die Steuerbahn Bestandteil einer Steuerfläche.

Als Alternative zum Steuerbolzen, wäre es auch denkbar, ein Wälzlager, insbesondere Kugellager, vorzusehen, das mit der Dämpfungs-Steuerkulisse in Kontakt kommen kann.

In besonders bevorzugter Weise sind die Dämpfungs-Steuerkulisse am mechanischen Steuerelement und der Steuerbolzen oder das Wälzlager am mechanischen Gegen-Steuerelement angeordnet.

In besonders bevorzugter Weise ist das mechanische Steuerelement bei Aktivierung des Stellantriebs ausgehend von einer mit der Anschlagglied-Ausgangsstellung korrespondierenden Steuerelement-Grundstellung per Steuerbewegung in eine mit der Anschlagglied-Endstellung korrespondierenden Steuerelement-Dämpfungsendstellung bewegbar.

Bei einer Weiterbildung der Erfindung ist die Steuerbahn der Dämpfungs-Steuerkulisse als Axial-Steigungsfläche ausgebildet, mit einer axial zur Bewegungsachse verlaufenden Steigung, die ausgehend von der Grundstellung des mechanischen Steuerelements hin zur Steuerelement-Dämpfungsendstellung in Richtung hin zum Grundkörper ansteigt.

Bei einer Weiterbildung der Erfindung übernimmt das mechanische Steuerelement zusätzlich zur Steuerung der Dämpfungsbewegung des Anschlagglieds über Absenk-Steuermittel auch die Steuerung der Absenkbewegung des Anschlagglieds aus der Bewegungsebene heraus. Das mechanische Steuerelement ist demnach ein Multifunktionsbauteil, das sowohl zur Dämpfungs-Steuerung, als auch zur Absenk-Steuerung des Anschlagglieds verwendet werden kann.

Bei einer Weiterbildung der Erfindung weisen die Absenk-Steuermittel eine Absenk-Steuerkulisse und einen Absenk-Steuerbolzen auf.

In besonders bevorzugter Weise ist das mechanische Steuerelement als um eine Rotationsachse drehbare Steuerscheibe ausgebildet, wobei die Steuerelement-Dämpfungsendstellung ausgehend von der Steuerelement-Grundstellung durch Rotation der Steuerscheibe um einen bestimmten Drehwinkel, beispielsweise durch Rotation um 180°, erreichbar ist. Demzufolge kann also die Steuerscheibe bei Aktivierung des Stellantriebs durch eine Drehbewegung um einen bestimmten Drehwinkel das Anschlagglied in die Anschlagglied-Dämpfungsendstellung bewegen.

Bei einer Weiterbildung der Erfindung ist die Dämpfungs-Steuerkulisse an der Steuerscheibe an einer zur Grundkörper hin zugewandten ersten stirnseitigen Scheibenfläche der Steuerscheibe ausgebildet. Die Axial-Steigungsfläche kann also an dieser stirnseitigen Scheibenfläche ausgebildet sein. Demnach kann sich die Mantelfläche der Steuerscheibe ausgehend von der Steuerelement-Grundstellung hin zur Steuerelement-Dämpfungsendstellung verbreitern.

Bei einer Weiterbildung der Erfindung sind die Absenk-Steuermittel durch die Steuerscheibe und den Steuerbolzen oder einen zusätzlich zum Wälzlager für das Absenken zuständigen Steuerstift gebildet, derart, dass die Steuerscheibe ausgehend von der Steuerelement-Dämpfungsendstellung um einen bestimmten Drehwinkel hin zur einer Steuerelement-Absenkendstellung weiter rotierbar ist, wobei bei der Rotation der Steuerbolzen oder der Steuerstift auf einer radial zur Bewegungsachse verlaufenden an der Absenk-Steuerkulisse ausgebildeten Radial-Steigungsfläche entlangführbar ist. Zweckmäßigerweise schließt sich daher an der Steuerscheibe an die Axial-Steigungsfläche eine Radial-Steigungsfläche an. Für die Dämpfungs-Steuerung dient daher die Axial-Steigungsfläche, während für die Absenk-Steuerung die Radial-Steuerfläche zum Einsatz kommt.

Bei einer Weiterbildung der Erfindung ist das mechanische Steuerelement als ein entlang einer vorzugsweise senkrecht zur Bewegungsachse ausgerichteten Linearachse verfahrbarer Schlitten ausgebildet, an dem die Steuerkulisse ausgebildet ist. Der Stellantrieb zur Einleitung der Steuerbewegung auf den Schlitten kann dabei als Linearantrieb ausgebildet sein.

Bei einer Weiterbildung der Erfindung weisen die Aktivierungsmittel wenigstens einen mit dem Anschlagglied gekoppelten Sensor und eine elektronische Steuereinheit auf, wobei die elektronische Steuereinheit dazu geeignet ist, vom Sensor übermittelte Sensorsignale empfangen zu können und Aktivierungssignale zur Aktivierung des Stellantriebs auszugeben.

Besonders bevorzugt ist der Sensor Bestandteil eines Wegmesssystems, wobei mittels des Sensors der Hub des Anschlagglieds zwischen der Anschlagglied-Ausgangsstellung und der Anschlagglied-Endstellung detektierbar ist und nach einem nach dem Aufprall eines Gegenstandes durch das Anschlagglied zurückgelegten und mittels des Sensors detektierbaren Teilhub ein Aktivierungssignal an den Stellantrieb ausgebbar ist.

In besonders bevorzugter Weise ist die Steuereinheit derart ausgebildet, dass aus dem detektierten Teilhub des Anschlagglieds in Kombination mit der Zeit für die Zurücklegung des Teilhubs eine Ist-Geschwindigkeit des Anschlagglieds und somit des Gegenstandes berechenbar ist, die als Grundlage zum Auslesen, insbesondere zur Berechnung eines Bewegungsprofils für das mechanische Steuerelement dient, das dann gemäß dem abgerufenen Bewegungsprofil antreibbar ist. Das Bewegungsprofil wird vorzugsweise mittels eines zur Steuereinheit gehörenden Prozessors berechnet. Denkbar ist jedoch auch, dass bereits Bewegungsprofile in der Steuereinheit hinterlegt sind, und über die berechnete Geschwindigkeit ein bestimmtes zugehöriges ausgelesen wird.

Bei einer Weiterbildung der Erfindung ist der wenigstens eine Sensor als Hall-Sensor, insbesondere linearer Hall-Sensor, ausgebildet, der mit einem Magneten, vorzugsweise Stabmagneten, zur Erzeugung des durch den Hall-Sensor detektierbaren Magnetfelds zusammenwirkt. Zweckmäßigerweise ist der Magnet, insbesondere Stabmagnet, am Anschlagglied und der Hall-Sensor ortsfest am Grundkörper angeordnet. Es ist möglich, auch andere Arten von Sensoren, insbesondere zur Geschwindigkeitsmessung zu verwenden, beispielsweise magnetoresistive Sensoren.

Bei einer Weiterbildung der Erfindung ist der Stellantrieb als elektrischer Stellantrieb, vorzugsweise Elektromotor, insbesondere Getriebe-Schrittmotor, ausgebildet.

Bei einer Weiterbildung der Erfindung weist der Stellantrieb eine rotatorisch antreibbare Abtriebswelle auf, dessen rotatische Antriebsbewegung über eine Passfederverbindung auf die Steuerscheibe übertragbar ist. Im Falle einer Ausgestaltung des mechanischen Stelleelements als linear verfahrbarer Schlitten kann die rotatorische Antriebsbewegung über eine Übersetzung, beispielsweise in Form eines Übersetzungsgetriebes in eine Tranlations- beziehungsweise Linearbewegung für den Schlitten übersetzt werden. Alternativ ist es möglich, mittels eines Linearantriebs eine lineare Antriebsbewegung auf den Schlitten einzuleiten.

Bei einer Weiterbildung der Erfindung weist die Dämpfungseinrichtung einen mit dem Anschlagglied gekoppelten Stoßdämpfer auf. Zweckmäßigerweise ist der Stoßdämpfer als hydraulischer Stoßdämpfer ausgebildet. Es sind jedoch auch pneumatische Stoßdämpfer einsetzbar.

In besonders bevorzugter Weise sind dem Anschlagglied erste Federmittel zur Vorspannung des Anschlagglieds in die Anschlaglied-Ausgangsstellung zugeordnet sind, wobei vorzugsweise die Federmittel Bestandteile der Dämpfungseinrichtung sind, insbesondere in den Stoßdämpfer integriert sind. Ist kein Gegenstand angeschlagen, befindet sich das Anschlagglied also in Folge der Federkraft der Federmittel in der Anschlagglied-Ausgangsstellung. Bei Wegnahme der auf das Anschlagglied in der Bewegungsrichtung wirkenden Last durch einen angeschlagenen Gegenstand, bleibt das Anschlagglied in der Anschlagglied-Dämpfungsendstellung, bleibt also arretiert. Erst wenn das Steuerelement aus der Steuerelement-Dämpfungsendstellung herausbewegt wird, kann das Anschlagglied wieder selbsttätig in Folge der Federkraft der Federmittel in die Anschlagglied-Ausgangsstellung zurückgestellt werden. Ein Vorteil dieser Ausgestaltung ist, dass ein Handling des Gegenstandes, insbesondere Werkstückträgers, beispielsweise ein Abheben von der Transporteinrichtung möglich ist ohne dass sich Position des Anschlagglieds ändert,, wodurch der Gegenstand nach dem Handlingsvorgang wieder positionsgenau in seine vorherige Position zurückgesetzt werden kann.

Bei einer Weiterbildung der Erfindung sind im Anschlagglied zweite entgegen des Abwärtshubs wirkende Federmittel zur Vorspannung des Anschlagglieds in die in die Bewegungsebene hineinragende Anschlagglied-Ausgangsstellung zugeordnet sind. Zweckmäßigerweise sind die Federmittel in den Grundkörper integriert und stützen sich einerseits am Grundkörper und andererseits am Anschlagglied ab. Die Federkraft der zweiten Federmittel wirkt also dem Abwärtshub entgegen, wodurch das Anschlagglied selbsttätig wieder durch die Federkraft der zweiten Federmittel in die Anschlagglied-Ausgangsstellung zurückgestellt werden kann.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines ersten Ausführungsbeispiels des erfindungsgemäßen Anschlagmoduls,
- Figur 2: eine Seitenansicht auf das Anschlagmodul von Figur 1 montiert an einer Transporteinrichtung,
- Figur 3: eine perspektivische Darstellung der Transporteinrichtung von Figur 2, mit dem Anschlagglied des Anschlagmoduls in abgesenkter Stellung
- Figur 4: eine Stirnansicht des Anschlagmoduls von Figur 1,
- Figur 5: einen Längsschnitt durch das Anschlagmodul von Figur 1 entlang der Linie V-V in Figur 4,
- Figur 6: eine perspektivische Darstellung des mechanischen Steuerelements in Form einer Steuerscheibe des Anschlagmoduls von Figur 1,
- Figur 7: eine Explosionsdarstellung des Anschlagmoduls von Figur 1,
- Figur 8: eine Seitenansicht der Steuerscheibe aus Figur 6,
- Figur 9: eine Explosionsdarstellung des Anschlagmoduls von Figur 1 von der anderen Stirnseite aus gesehen,
- Figur 10: eine Seitenansicht des Anschlagmoduls von Figur 1 mit dem Anschlagglied in der Anschlagglied-Ausgangsstellung und der Steuerscheibe in der Steuerelement-Grundstellung,
- Figur 11: einen Schnitt durch die Steuerscheibe entlang der Linie XI-XI aus Figur 10,
- Figur 12: eine Seitenansicht des Anschlagmoduls von Figur 1, mit dem Anschlagglied in der Anschlagglied-Endstellung und der Steuerscheibe in der Steuerelement-Dämpfungsendstellung,
- Figur 13: einen Schnitt durch die Steuerscheibe entlang der Linie XIII-XIII in Figur 12,
- Figur 14: eine Seitenansicht des Anschlagmoduls von Figur 1, wobei sich das Anschlagglied in der abgesenkten Freigabeposition befindet und die Steuerscheibe in einer weiteren Zwischenposition angeordnet ist,
- Figur 15: einen Schnitt durch die Steuerscheibe entlang der Linie XV-XV in Figur 14,
- Figur 16: eine perspektivische Darstellung eines zweiten Ausführungsbeispiels der des erfindungsgemäßen Anschlagmoduls,
- Figur 17: einen Längsschnitt durch das Anschlagmodul entlang der Linie XVII-XVII in Figur 18, wobei sich das Anschlagglied in der Anschlagglied-Ausgangsstellung befindet,
- Figur 18: eine Vorderansicht auf das Anschlagmodul von Figur 16,
- Figur 19: einen Längsschnitt durch das Anschlagmodul von Figur 20 entlang der Linie XIX-XIX in Figur 20,
- Figur 20: eine teilweise geschnittene Vorderansicht auf das Anschlagmodul von Figur 16,
- Figur 21: einen Horizontalschnitt durch das Anschlagmodul von Figur 16 entlang der Linie XXI-XXI in Figur 18,
- Figur 22: einen Horizontalschnitt durch das Anschlagmodul von Figur 16 entlang der Linie XXII-XXII in Figur 20,
- Figur 23: eine Vorderansicht, teilweise geschnitten, ähnlich der Vorderansicht aus Figur 29, wohingegen das Anschlagglied in der abgesenkten Freigabeposition ist,
- Figur 24: eine perspektivische Ansicht des mechanischen Steuerelements in Form des Steuerschlittens,
- Figur 25: eine Draufsicht auf den Steuerschlitten von Figur 24,
- Figur 26: eine Rückansicht auf den Steuerschlitten von Figur 24,
- Figur 27: eine perspektivische Darstellung eines dritten Ausführungsbeispiels des erfindungsgemäßen Anschlagmoduls,
- Figur 28: eine Stirnansicht auf das Anschlagmodul von Figur 27,
- Figur 29: einen Längsschnitt durch das Anschlagmodul von Figur 28 entlang der Linie XXIX-XXIX mit Blickrichtung Mittelachse des Anschlagmoduls,
- Figur 30: einen Längsschnitt durch das Anschlagmodul von Figur 28 entlang der Linie XXIX-XXIX mit einer zu Figur 29 entgegengesetzten Blickrichtung und
- Figur 31: eine vergrößerte Darstellung der Einzelheit X aus Figur 30.

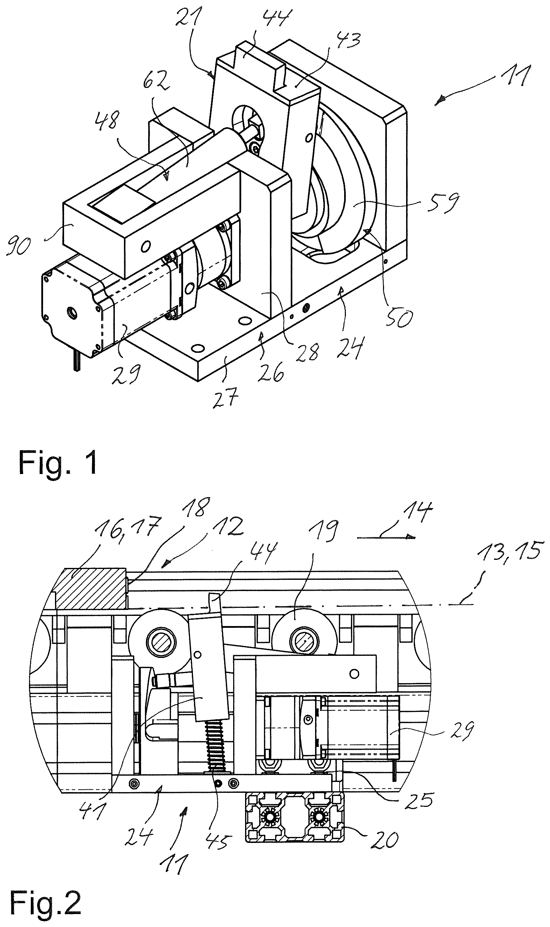

Die Figuren 1 bis 15 zeigen ein erstes Ausführungsbeispiel des erfindungsgemäßen Anschlagmoduls 11. Das Anschlagmodul 11 wird vorzugsweise in automatischen Bearbeitungs- und Fördereinrichtungen, beispielsweise Transportbändern 12 eingesetzt, beispielsweise solche in der Automobilindustrie, um sich in einer Bewegungsebene beziehungsweise Transportebene 13 in einer Arbeitsbewegungsrichtung 14, die entlang einer Bewegungsachse 15 orientiert ist, bewegende Gegenstände 16 zu vereinzeln. Bei den Gegenständen 16 handelt es sich meist um Werkstückträger 17 oder direkt auf dem Transportband transportierte Werkstücke. Bei dem Werkstückträger 17 kann es sich beispielsweise um eine Werkstückpalette handeln. Der Werkstückträger 17 hat eine vordere, dem Anschlagmodul 11 zugeordnete Werkstückträger-Anschlagfläche 18.

Im gezeigten Beispielsfall läuft der Werkstückträger 17 auf einer Vielzahl von in Arbeitsbewegungsrichtung 14 hintereinander angeordneten Transportrollen 19, die unterhalb der Transportebene 13 angeordnet sind. Das Anschlagmodul 11 ist an der Transporteinrichtung 12, insbesondere mit Hilfe eines Querträgers 20 derart angeordnet, dass ein nachstehend noch näher beschriebenes Anschlagglied 21 in seiner Anschlagglied-Ausgangsstellung 22 in die Transportebene 13 hineinragt, wobei das Anschlagglied 21 eine entgegen der Arbeitsbewegungsrichtung 14 ausgerichtete, also der Werkstückträger-Anschlagfläche 18 zugewandte Anschlagfläche 23 aufweist.

Das Anschlagmodul 11 besitzt einen Grundkörper 24, der, wie die Zusammenschau der Figuren 1 und 2 zeigt, mittels Befestigungsmitteln, beispielsweise Befestigungsschrauben 25 am Querträger 20 der Transportvorrichtung 12 zu befestigen ist.

Der Grundkörper 24 ist ein mehrteiliges Bauteil und besitzt ein Basisteil 26, das eine Befestigungsplatte 27 aufweist, über die das Anschlagmodul 11, wie vorstehend beschrieben, am Querträger 20 der Transportvorrichtung 12 befestigt werden kann.

Im gezeigten Beispielsfall steht von der Befestigungsplatte 27 des Basisteils 26 eine Stützplatte 28 ab, an der ein nachfolgend noch näher beschriebener Stellantrieb 29 angeordnet ist. Der Stellantrieb 29 weist eine Längsachse 30 auf, die sich im gezeigten Beispielsfall parallel zur Bewegungsachse 15 erstreckt.

Das Anschlagglied 21 ist an einem Anschlaggliedträger 35 relativ beweglich zu diesem gelagert. Der Anschlaggliedträger 35 umfasst im gezeigten Beispielsfall zwei parallel zueinander angeordnete insbesondere kreiszylindrisch ausgebildete Lagerbolzen 47a, 47b, die ihrerseits mittels eines Schwenklagers jeweils um eine quer zur Längsachse 30 verlaufenden Schwenkachse 36 schwenkbar an der Befestigungsplatte 27 gelagert sind. Das Schwenklager umfasst zwei in der Befestigungsplatte 27 ausgebildete Lageraufnahmen, in die jeweils die Enden der Lagerbolzen 47a, 47b schwenkbeweglich aufgenommen sind. Die Lagerbolzen 47a, 47b besitzen jeweils quer zu ihrer Längsachse verlaufenden Querbohrungen 31a, 31b, durch die jeweils ein zugeordneter Schwenkachsstift 32 hindurchgesteckt ist, der wiederum in einem an der Stirnseite der Befestigungsplatte 27 ausmündenden Kanal 33 aufgenommen ist. Der Anschlaggliedträger 35 und damit auch das Anschlagglied 21 sind damit beweglich am Grundkörper 24 gelagert.

Wie nachfolgend noch näher beschrieben, ist das Anschlagglied 21 mittels des Stellantriebs per Abwärtshub aus der Transportebene 13 heraus und per Aufwärtshub in diese zurückbewegbar.

Im gezeigten Beispielsfall ist das Anschlagglied 21 relativ beweglich zum Anschlaggliedträger 35 gelagert, und zwar quer zur Längsachse 30 beziehungsweise zur Bewegungsachse 15. Das Anschlagglied 21 besteht aus einem Basiskörper 41, beispielsweise in quaderförmiger Gestalt, wobei der Basiskörper 41 eine Oberseite 42 und eine Unterseite 43 besitzt. An der Oberseite 42 ragt eine in der Anschlagglied-Ausgangsstellung 22 in die Transportebene 15 hineinragende Sperrklinke 44 hervor, die beispielsweise keilförmig ausgebildet ist. Entgegen der Arbeitsbewegungsrichtung 14 ist an der Sperrklinke 44 die Anschlagfläche 23 ausgebildet.

Die relative Beweglichkeit des Anschlagglieds relativ zum Anschlaggliedträger 35 wird durch zweite Federmittel 45 erzielt. Im gezeigten Beispielsfall sind zwei Federelemente 46a, 46b vorgesehen, die sich einerseits am Anschlaggliedträger 35 und andererseits an der Befestigungsplatte 27 abstützen, und deren Federkraft das Anschlagglied 21 von der Befestigungsplatte 27 nach oben wegdrücken, das heißt in die in die Transportebene 13 hineinragende Stellung drücken, bei der es sich beispielsweise um die Anschlaggliedträger-Ausgangsstellung 22 handeln kann. Zweckmäßigerweise sind die Federelemente 46a, 46b jeweils als Druckfedern ausgebildet, die jeweils auf den Lagerbolzen 47a, 47b geführt sind.

Das Anschlagmodul 11 besitzt ferner eine mit dem Anschlagglied 21, insbesondere mit dem Anschlaggliedträger 35 gekoppelte Dämpfungseinrichtung 48.

Die Dämpfungseinrichtung 48 dient zum Dämpfen des Aufpralls eines Gegenstandes 16 auf das Anschlagglied 21, derart, dass das Anschlagglied 21 beim Aufprall des Gegenstandes aus der Anschlagglied-Ausgangsstellung 22 heraus in Richtung einer eine Weiterbewegung des Anschlagglieds 21 verhindernden Anschlagglied-Endstellung 49 gedämpft bewegbar ist. Es wird also beispielsweise der Aufprall des Werkstückträgers 17 auf die Sperrklinke 44, das heißt das Anschlagen des Werkstückträger-Anschlags 18 auf die Anschlagfläche 23 an der Sperrklinke 44 gedämpft. Dabei wird die Bewegung des ankommenden Gegenstandes 16, also beispielsweise des Werkstückträgers 17 bis zum Stillstand abgebremst.

Ein wesentliches Element des Anschlagmoduls 11 ist ein mechanisches Steuerelement 50, das mit dem Stellantrieb 29 bewegungsgekoppelt ist wobei das mechanische Steuerelement 50 mit einem am Anschlagglied 21 angeordneten mechanischen Gegen-Steuerelement 51 derart gekoppelt ist, dass beim Aufprall des Gegenstandes 16 der Stellantrieb 29 über Aktivierungsmittel aktivierbar ist und das mechanische Steuerelement 50 veranlasst, eine Steuerbewegung auszuführen, wodurch über den Abgriff mittels des mechanischen Gegen-Steuerelements das Anschlagglied 21 von der Anschlagglied-Ausgangsstellung 22 in die Anschlagglied-Endstellung 49 bewegbar ist.

In der Regel ist das Anschlagmodul 11 auf die höchste Gesamtenergie (Gewicht, Geschwindigkeit und Vortriebskraft) abgestimmt, so dass ein Gegenstand mit der höchsten Gesamtenergie zuverlässig gedämpft abgebremst und gestoppt werden kann. Dabei wird das Anschlagglied 21 mittels der Gesamtenergie des ankommenden Gegenstandes 16, also beispielsweise des Werkstückträgers 17 vollständig von der Anschlagglied-Ausgangsstellung 22 in die Anschlagglied-Endstellung 49 bewegt, wo der angeschlagene Gegenstand 16 dann in der Anschlagglied-Endstellung 49 endgültig zum Stillstand gekommen ist.

Kommen Gegenstände 16 mit geringerer Gesamtenergie an, so reicht diese Gesamtenergie nicht aus, das Anschlagglied 21 vollständig aus der Anschlagglied-Ausgangsstellung 22 in die Anschlagglied-Endstellung 49 zu bewegen, das heißt, das Anschlagglied 21 bleibt in einer Zwischenposition zwischen der Anschlagglied-Ausgangsstellung 22 und der Anschlagglied-Endstellung 49 stehen, was dazu führt, dass auch der Werkstückträger 17 nicht in der definierten Endposition steht. Dies ist nachteilig, da dann die Position des Anschlaggliedes und damit die Haltposition des Gegenstandes 16 abhängig sind von der Gesamtenergie, so dass das anschließende Handling erschwert wird.

Gemäß erstem Ausführungsbeispiel ist das mechanische Steuerelement 50 beispielhaft in Form einer Steuerscheibe gezeigt.

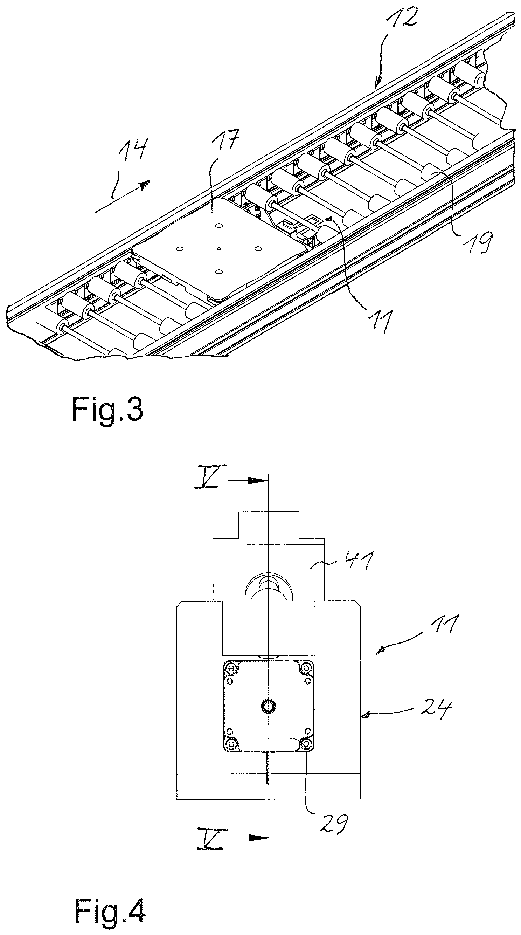

Wie insbesondere die Zusammenschau der Figur 4, 5 und 8 zeigt, ist die Steuerscheibe mit der Abtriebswelle 40 des Stellantriebs 29 derart gekoppelt, dass eine Drehbewegung der Abtriebswelle 40 eine Drehwegung der Steuerscheibe bewirkt.

Der Stellantrieb 29 ist im gezeigten Beispielsfall als elektrischer Stellantrieb, insbesondere in Form eines Getriebe-Schrittmotors dargestellt und nachfolgend näher beschrieben.

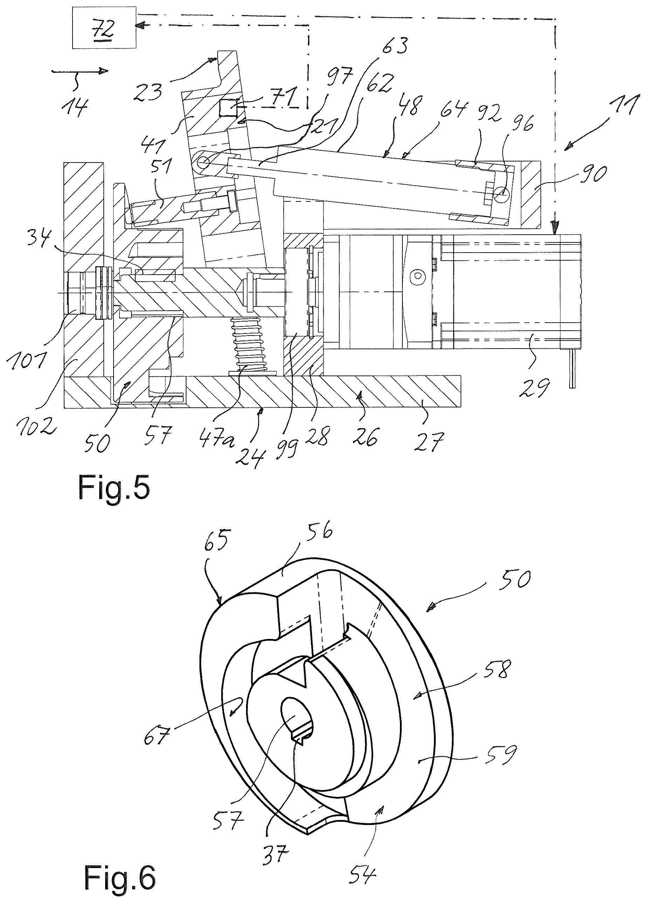

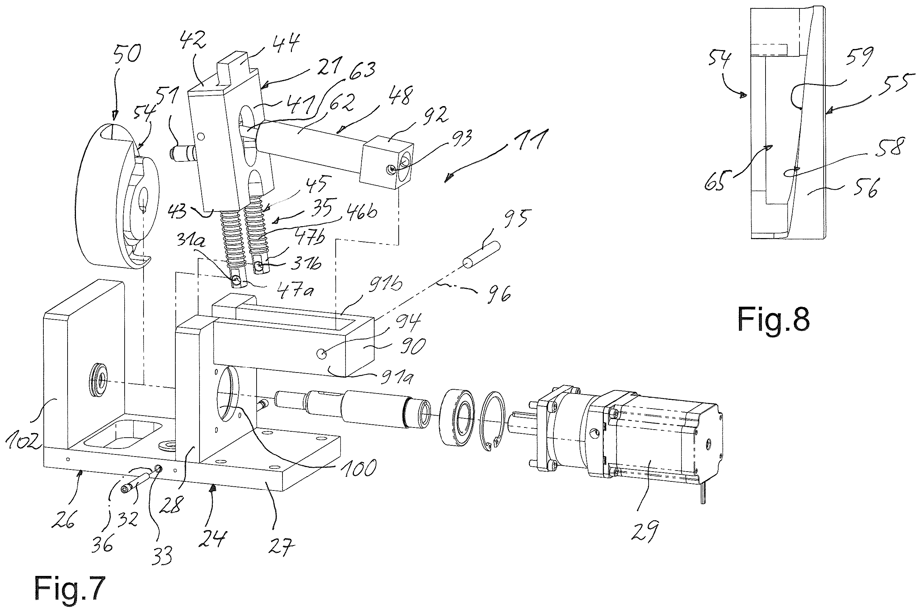

Wie beispielhaft in den Figur 6 und 7 gezeigt, besitzt die Steuerscheibe eine im mit der Abtriebswelle 40 des Stellantriebs 29 gekoppelten Zustand dem Stellantrieb 29 zugewandte vordere Scheibenfläche 54 und eine der vordere Scheibenfläche 54 entgegengesetzt liegende hintere Scheibenfläche 55. Ferner besitzt die Steuerscheibe noch eine Mantelfläche 56. Während die vordere Scheibenfläche 54 charakteristisch ausgeformt ist, wie nachfolgend noch näher beschrieben, ist die Rückseite im Wesentlichen eben. Die Steuerscheibe besitzt ferner schlüssellochartig ausgestaltetes zentrales Durchgangsloch 57, das von der Abtriebswelle 40 durchsetzt ist. Steuerscheibe und Abtriebswelle 40 sind dabei mittels eine Passfederverbindung mittels Passfeder 34 und einer an der Durchgangsöffnung ausgebildeten Nut 37 drehfest miteinander verbunden, wodurch die von der Abtriebswelle 40 stammende Drehbewegung unmittelbar auf die Steuerscheibe übertragen wird.

Ein wichtiger Aspekt ist, dass die Steuerscheibe mit einer Dämpfungs-Steuerkulisse 58 ausgestattet ist, die eine nachfolgend noch näher beschriebene Steuerbahn für das mechanische Gegen-Steuerelement 51 aufweist.

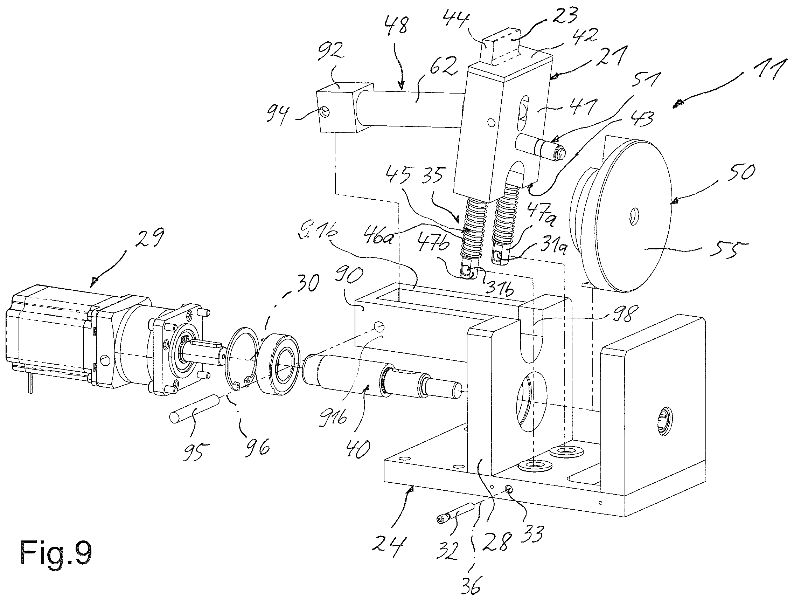

Wie insbesondere in den Figuren 7 und 9 gezeigt, ist das mechanische Gegen-Steuerelement 51 als Steuerbolzen ausgestaltet, der an der Vorderseite des Anschlagglieds 21 angeordnet ist und von dort nach vorne abragt.

Zur Dämpfungs-Steuerung weist die Steuerscheibe die besagte Dämpfungs-Steuerkulisse 58 auf, die sich an der vorderen Scheibenfläche 54 befindet. Die Dämpfungs-Steuerkulisse 58 weist eine Steuerbahn in Form einer Axial-Steigungsfläche 59 auf.

Die Steuerscheibe ist bei Aktivierung des Stellantriebs 29 ausgehend von einer mit der Anschlagglied-Ausgangsstellung 22 korrespondierenden Steuerelement-Grundstellung 60 der Steuerbewegung in eine mit der Anschlagglied-Endstellung 49 korrespondierenden Steuerelement-Dämpfungsendstellung 61 bewegbar. Im Falle der Steuerscheibe veranlasst der Stellantrieb 29 die Steuerscheibe zu einer Drehung um einen bestimmten Drehwinkel, wobei ausgehend von der Steuerelement-Grundstellung 60 nach Zurücklegung des bestimmten Drehwinkels die Steuerelement-Dämpfungsendstellung 61 erreicht wird. Der Drehwinkel beträgt im gezeigten Ausführungsbeispiel 180°, kann aber auch kleiner oder größer als 180° betragen.

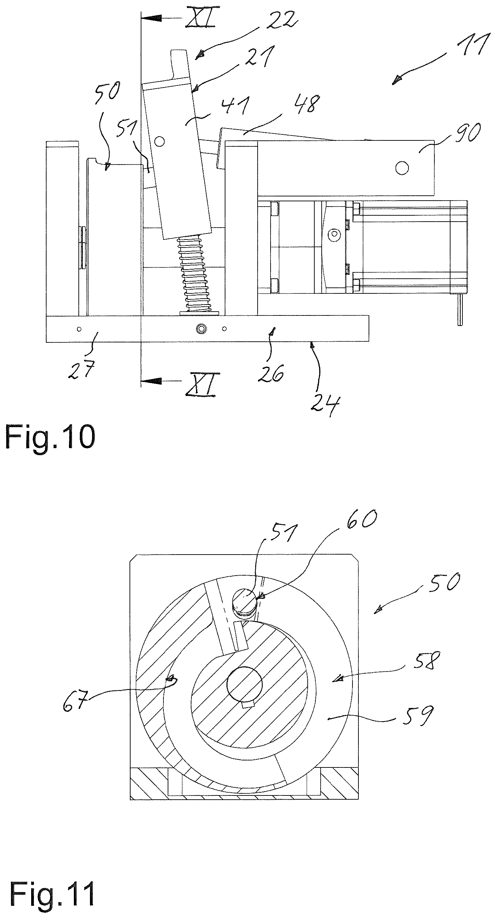

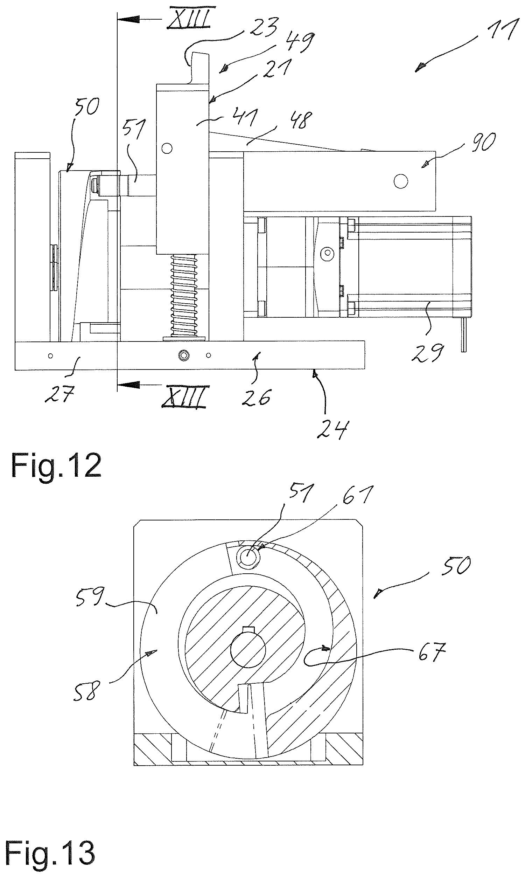

Ist der Steuerbolzen in Kontakt mit der Axial-Steigungsfläche 59 an der Steuerscheibe, so wird er entlang der Axial-Steigungsfläche 59 geführt, wobei die Steigung derart ausgebildet ist, dass der Abstand zwischen der Axial-Steigungsfläche 59 und einer durch die Stützplatte 28 aufgespannten Ebene in Axialrichtung bei der Rotation von der Steuerelement-Grundstellung 60 hin zur Steuerelement-Dämpfungsendstellung 61 kleiner wird, was die Zusammenschau der Figuren 10 und 12 zeigt, wodurch das Anschlagglied 21 aufgrund der Führung des Steuerbolzens entlang der Axial-Steigungsfläche 59 in die Anschlagglied-Endstellung 49 verlagert wird, im gezeigten Ausführungsbeispiel also in die Anschlagglied-Endstellung 49 geschwenkt wird.

Wie insbesondere in Figur 5 gezeigt, besitzt das Anschlagmodul 11 eine Dämpfungseinrichtung 48, die einen Stoßdämpfer 62 aufweist. Der Stoßdämpfer 62 ist am Grundkörper 24, insbesondere dort an der Rückseite der Stützplatte 37 befestigt. Wie insbesondere in den Figuren 7 und 9 gezeigt, ist an der Rückseite der Stützplatte ein gabelförmiger Dämpferträger 90 befestigt, der zwei parallel zueinander ausgerichtete Trägerschenkel 91a, 91b aufweist, zwischen denen der Stoßdämpfer aufgenommen ist. Der Stoßdämpfer 62 besitzt ferner einen insbesondere quaderartig ausgestalteten Lagerabschnitt 92, der mit einer Querbohrung 93 versehen ist, die mit Bohrungen 94 in den Trägerschenkel fluchtet, so dass mit Hilfe eines durch die Bohrungen hindurchgeführten Schwenklagerbolzens 95 eine Schwenklager für den Stoßdämpfer gebildet wird, so dass dieser um eine Stoßdämpfer-Schwenkachse 96 bei der Bewegung des Anschlagglied 21 beim Anschlagen eines Gegenstandes verschwenkbar ist.

Der Stoßdämpfer 62 weist ferner einen Dämpferstößel 63 beziehungsweise eine Dämpfer-Kolbenstange auf, der ebenfalls um eine weitere Schwenkachse 97 schwenkbar am Basiskörper 41 des Anschlagglieds 21 gelagert ist. Der Stoßdämpfer durchsetzt die Stützplatte 28 dabei über einen in der Stützplatte 28 ausgebildeten randseitig offenen Durchbruch 98( Fig.9).

Wird das Anschlagglied 21 in Richtung der Anschlagglied-Endstellung 49 bewegt, fährt der Dämpferstößel 63 in das Dämpfergehäuse ein und es findet eine Bewegungsdämpfung der durch den Aufprall des Gegenstandes auf das Anschlagglied eingeleiteten Schwenkbewegung des Anschlagglieds 21 statt. Dem Stoßdämpfer 62 sind erste Federmittel 64 zugeordnet, oder diese sind in den Stoßdämpfer 62 integriert, die den Anschlaggliedträger 35 in Richtung der Anschlagglied-Ausgangsstellung 22 vorspannen, das heißt im Falle, dass kein Gegenstand am Anschlagglied 21 liegt, drücken die ersten Federmittel 64 das Anschlagglied 21 zurück in die Anschlagglied-Ausgangsstellung 22, falls die Steuerscheibe aus der Steuerelement-Absenkendstellung 66 heraus weiter in die Steuerelement-Grundstellung 60 rotiert ist.

Das mechanische Steuerelement übernimmt zusätzlich zur Steuerung der Dämpfungsbewegung des Anschlagglieds 21 über Absenk-Steuermittel auch die Steuerung der Absenkbewegung des Anschlagglieds 21 aus der Bewegungsebene heraus.

Im gezeigten Beispielsfall besitzt die Steuerscheibe eine Absenk-Steuerkulisse 65, die sich in Drehrichtung an die Dämpfungs-Steuerkulisse 58 anschließt. Die Absenk-Steuermittel werden gemäß erstem Ausführungsbeispiel ebenfalls durch die Steuerscheibe und den Steuerbolzen gebildet, derart, dass die Steuerscheibe ausgehend von der Steuerelement-Dämpfungsendstellung 61 um einen bestimmten Drehwinkel hin zu einer Steuerelement-Absenkstellung 66 weiter rotierbar ist, wobei bei der Rotation der Steuerbolzen auf einer radial zur Längsachse 30 bzw. Rotationsachse verlaufenden an der Absenk-Steuerkulisse 65 ausgebildeten Radial-Steigungsfläche 67 entlanggeführt wird.

Die Kopplung der Abtriebswelle 40 des Stellenantriebs 29 mit der Steuerscheibe erfolgt durch die bereits erwähnte Passfederverbindung. Die Abtriebswelle 40 ist an zwei voneinander axial beabstandeten Stellen über ein erstes Drehlager 99 und ein zweites Drehlager 101 drehbeweglich am Grundkörper 24 gelagert. Das erste Drehlager 99 sitzt an der Stützplatte 28, die hierzu ein zentrales Lagerloch 100 aufweist. Das zweite Drehlager 101 sitzt an einer insbesondere parallel zur Stützplatte ausgerichteten, ebenfalls zum Grundkörper 24 gehörenden Abschlussplatte 102. Mithin ist die Steuerscheibe im Zwischenraum zwischen der Stützplatte 28 und der Abschlussplatte 102 aufgenommen.

Wie bereits erwähnt, ist der Stellantrieb über Aktivierungsmittel aktivierbar, so dass die Abtriebswelle 40 in eine Drehbewegung versetzt wird und diese Drehbewegung über die zuvor beschriebene Passfederverbindung auf die Steuerscheibe übertragen wird. Die Aktvierungsmittel umfassen einen Sensor 71, der in Figur 5 lediglich schematisch gezeigt ist, wobei hier beispielhaft ein Sensor gezeigt ist, der auf die durch den Aufprall initiiere Bewegung des Anschlagglieds anspricht. Der Sensor ist in der Lage, den Anschlag des Gegenstandes, also beispielsweise des Werkstückträgers 17 am Anschlagglied zu detektieren und ein entsprechendes Sensorsignal an eine elektronische Steuereinheit 72 (Figur 5) zu übermitteln. Die elektronische Steuereinheit 72 ist dazu geeignet vom Sensor übermittelte Sensorsignale, insbesondere für den Fall eines Aufpralls, empfangen zu können und Aktivierungssignale zur Aktivierung des Stellantriebs 29 auszugeben.

Die Funktionsweise des Anschlagmoduls 11 ist insbesondere in den Figuren 5 bis 16 dargestellt und lässt sich wie folgt beschreiben:
Zunächst befindet sich das Anschlagglied 21 in der Anschlagglied-Ausgangsstellung 22, wobei die Sperrklinke 44 in die Transportebene 13 hineinragt. Die Steuerscheibe befindet sich, wie insbesondere in Figur 11 gezeigt, in der Steuerelement-Grundstellung 60 am niedrigsten Punkt der Axial-Steigungsfläche 59. Beim Aufprall eines Gegenstandes, also beispielsweise des Werkstückträgers 17, in dem der Werkstückträger-Anschlag 18 auf die Anschlagfläche 23 der Sperrklinke 44 aufprallt, wird dies über den Sensor 71 detektiert und an die elektronische Steuereinheit 72 per Sensorsignal übertragen, wobei die elektronische Steuereinheit 72 den Stellantrieb 29 aktiviert, so dass die Abtriebswelle 40 in eine Drehbewegung um einen bestimmten Drehwinkel versetzt wird.

In der Regel wird das Anschlagglied 21 durch den aufprallenden Gegenstand ein Stück weit Richtung Anschlagglied-Endstellung 49 bewegt, so dass der Steuerbolzen initial zunächst nicht an die Axial-Steigungsfläche 59 anliegt. Die Steuerscheibe rotiert jedoch unabhängig davon, wodurch im Falle, dass das Anschlagglied 21 nicht durch die Gesamtenergie des aufprallenden Gegenstandes komplett in die Anschlagglied-Endstellung 49 gefahren wird, der Steuerbolzen irgendwann in Kontakt mit der Axial-Steigungsfläche 59 kommt. Von da an wird der Steuerbolzen entlang der Axial-Steigungsfläche 59 geführt, wodurch das Anschlagglied 21 in jedem Fall, unabhängig von der Gesamtenergie, also insbesondere des Gewichts des aufprallenden Gegenstandes 16 in die Anschlagglied-Endstellung 49 verschwenkt wird. Zweckmäßigerweise rotiert die Steuerscheibe zwischen der Steuerelement-Grundstellung 60 und der Steuerelement-Dämpfungsendstellung 61 nicht mit gleichbleibender Geschwindigkeit sondern zunächst mit höherer Geschwindigkeit und zum Ende der Dämpfbewegung mit niedrigerer Geschwindigkeit.

Befindet sich das Anschlagglied 21 in seiner Anschlagglied-Endstellung 49, so ist der angeschlagene Gegenstand 16 zum Stillstand gedämpft abgebremst. Dies ist unabhängig von der Gesamtenergie des angeschlagenen Gegenstandes, so dass immer stets die Anschlagglied-Endstellung 49 eingenommen wird.

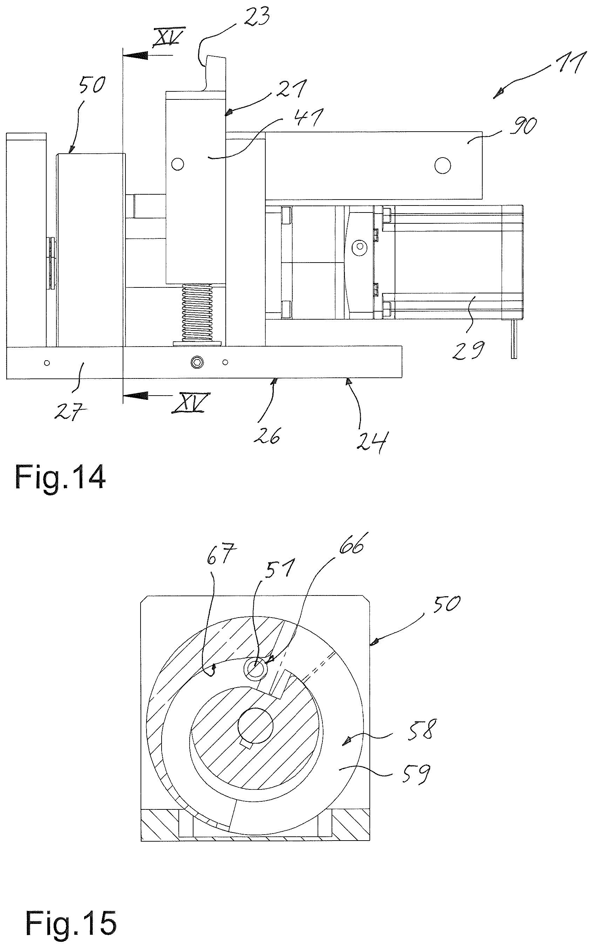

Soll der angeschlagene Gegenstand 16, also beispielsweise der angeschlagene Werkstückträger 17 wieder freigegeben werden, bedarf es eines Abwärtshubs des Anschlagglieds 21 aus der Transportebene 13 heraus. Hierzu dient ebenfalls die Steuerscheibe. Im gezeigten Beispielsfall hat die Steuerscheibe zwischen der Anschlagglied-Ausgangsstellung 22 und der Anschlagglied-Endstellung 49 ungefähr einen Drehwinkel von 180° zurückgelegt. Der Steuerbolzen befindet sich am obersten Punkt der Axial-Steigungsfläche 59. Beim anschließenden Weiterrotieren, fährt der Steuerbolzen in die Radial-Steigungsfläche 67 ein, wie es insbesondere in Figur 15 gezeigt ist.

Durch den spiralförmigen Verlauf der Radial-Steigungsfläche 67 wird der Steuerbolzen bei der Weiterrotation der Steuerscheibe in Richtung Rotationsachse verlagert, was dazu führt, dass das Anschlagglied 21 entgegen der Federkraft der zweiten Federmittel 45 aus der Transportebene 13 heraus in eine Freigabestellung bewegt wird.

Die Figuren 14 und 15 zeigen die Steuerscheibe in der Steuerelement-Absenkendstellung 66, die mit einer Freigabeposition des Anschlagglieds korrespondiert. In der Freigabestellung des Anschlagglieds 21 wird der angeschlagene Gegenstand 16 wieder freigegeben und kann mittels der Transporteinrichtung 12 in Arbeitsbewegungsrichtung 14 weiterbewegt werden.

Soll nun ein nächster Gegenstand 16 vereinzelt beziehungsweise gestoppt werden, so bedarf es der Rückstellung des Anschlagglieds in die Anschlagglied-Ausgangsstellung 22, was ebenfalls durch die Weiterbewegung der Steuerscheibe erzielt wird. Wird nämlich die Steuerscheibe aus der Steuerelement-Absenkstellung 66 um einen relativ geringen Drehwinkel weitergedreht, so gelangt der Steuerbolzen außer Eingriff mit der Radial-Steigungsfläche 67, wodurch das Anschlagglied in Folge der Federkraft der zweiten Federmittel 45 wieder in die Transportebene 13 zurückbewegt wird. Gleichzeitig gelangt der Steuerbolzen an die tiefste Stelle der Axial-Steigungsfläche 59, so dass die ersten Federmittel 64 eine Rückstellung des Anschlagglieds in die Anschlagglied-Ausgangsstellung 22 bewirken.

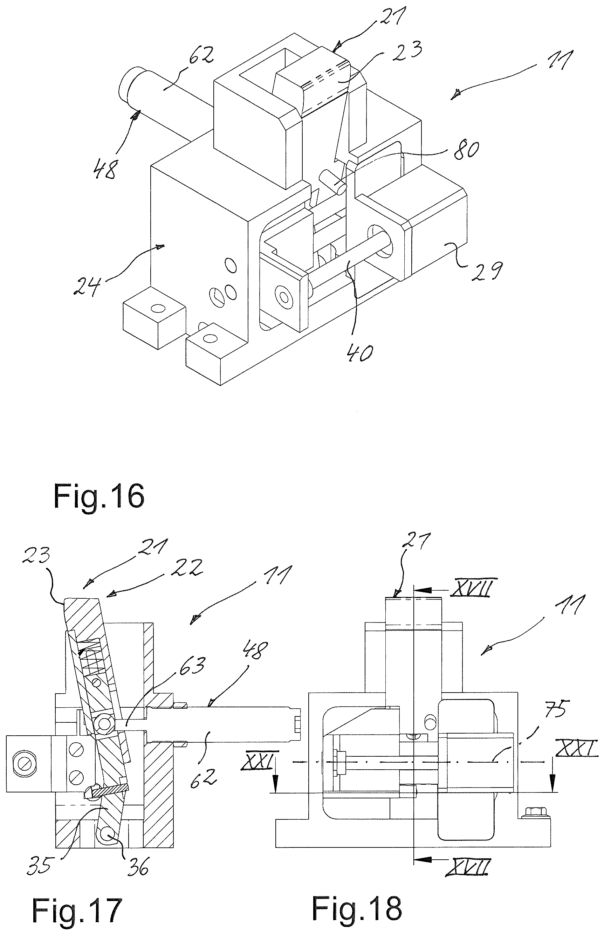

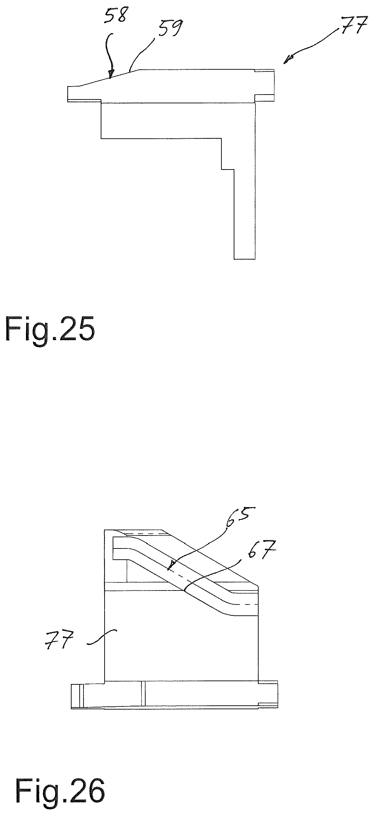

Die Figuren 16 bis 26 zeigen ein zweites Ausführungsbeispiel des erfindungsgemäßen Anschlagmoduls 11. Das zweite Ausführungsbeispiel unterscheidet sich von dem ersten Ausführungsbeispiel hauptsächlich dadurch, dass das mechanische Steuerelement unterschiedlich ausgebildet ist. Während im bereits beschriebenen ersten Ausführungsbeispiel als mechanisches Steuermittel eine Steuerscheibe eingesetzt wird, wird beim folgend beschriebenen zweiten Ausführungsbeispiel ein mechanisches Steuerelement 50 in Form eines entlang einer quer zur Bewegungsachse 15 ausgerichteten Linearachse 75 verfahrbarer Schlitten 76 verwendet.

Der Aufbau des restlichen Anschlagmoduls 21 ist ähnlich dem Aufbau des Anschlagsmoduls 21 gemäß dem ersten Ausführungsbeispiel, so dass hierauf nicht näher eingegangen wird. Jedenfalls ist das Anschlagglied 21 ebenfalls schwenkbar am Grundkörper 24 gelagert und kann zwischen einer Anschlagglied-Ausgangsstellung 22 und einer Anschlagglied-Endstellung 49 verschwenkt werden. Ferner ist das Anschlagglied 21 relativ beweglich zu einem Anschlaggliedträger 35 gelagert, wobei hier wiederum zweite Federmittel 45 vorgesehen sind, die das Anschlagglied 21 in die Transportebene 13 drücken.

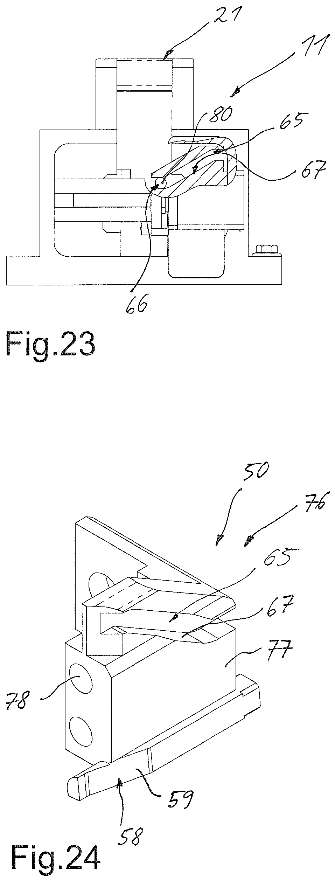

Der Stellantrieb 29 ist als Linearantrieb ausgebildet und besitzt eine beispielsweise als Gewindespindel ausgebildete Abtriebswelle 40, auf der der Schlitten 76 linear verstellbar gelagert ist. Der Schlitten ist in den Figuren 23 bis 26 beispielhaft dargestellt. Der Schlitten 76 besitzt einen Basiskörper 77, der beispielsweise von zwei parallel zur Linearachse 75 ausgerichteten Kanälen 78 durchsetzt ist, die wiederum von zwei am Grundkörper gelagerten Führungsachsen durchsetzt sind. An der Unterseite des Basiskörpers 77 befindet sich eine Dämpfungs-Steuerkulisse 58, die eine Axial-Steigungsfläche 59 aufweist, die mit einem am Anschlaggliedträger 35 angeordneten Steuerbolzen zusammenwirkt.

An der Oberseite des Basiskörpers 77 ist die Absenk-Steuerkulisse 65 ausgebildet, die Teil der Absenk-Steuermittel ist. Die Absenk-Steuerkulisse 65 weist eine Radial-Steigungsfläche 67 auf, die in radialer Richtung zur Bewegungsachse 15 ausgerichtet ist. Die Steigung der Radial-Steigungsfläche nimmt entlang der Bewegungsrichtung des Schlittens 76 entlang der Linearachse 75 ab. An der Radial-Steigungsfläche 67 ist ein Kulissenfolger 80 in Form eines Führungsbolzens geführt, der mit dem Anschlaggliedträger verbunden ist.

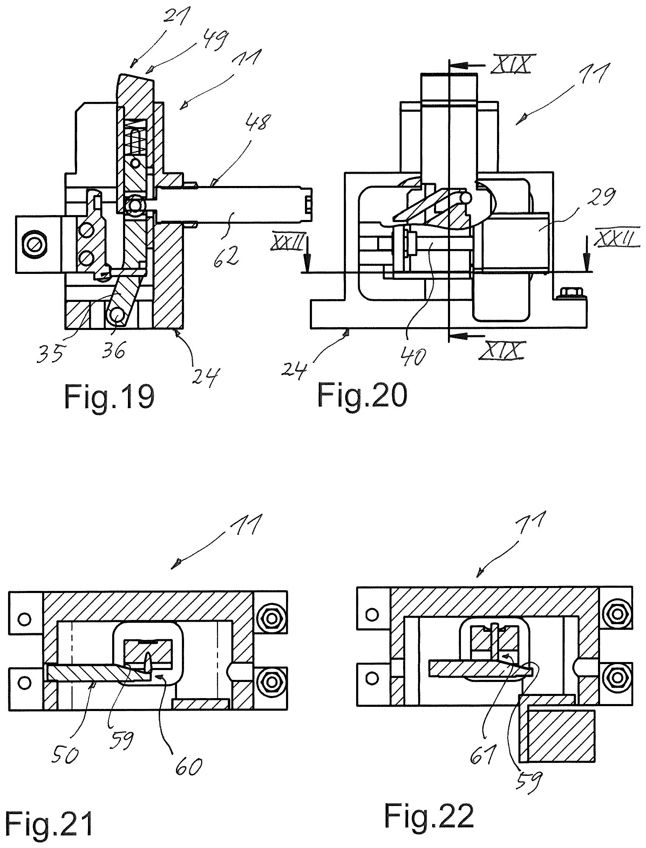

Die Wirkungsweise beziehungsweise Funktionsweise des zweiten Ausführungsbeispiels lässt sich wie folgt beschreiben:
Zunächst befindet sich das Anschlagglied 21 in der Anschlagglied-Ausgangsstellung 22, wie es beispielhaft in Figur 17 gezeigt ist. Beim Anschlagen eines Gegenstandes 16 auf das Anschlagglied wird wiederum über die Aktivierungsmittel der Linearantrieb angetrieben, wodurch der Schlitten 76 zu einer Linearbewegung entlang der Linearachse 75 veranlasst wird. Dabei gleitet der Steuerbolzen an der Axial-Steigungsfläche 59 entlang, so dass das Anschlagglied 21 unabhängig vom Gewicht des anschlagenden Gegenstandes ausgehend von der Anschlagglied-Ausgangsstellung 22 vollständig in die Anschlagglied-Endstellung 49 verstellt wird. Diese Situation ist in Figur 19 gezeigt.

Zum Freigeben des Gegenstandes, also beispielsweise des Werkstückträgers wird der Schlitten 77 in Bewegungsrichtung entlang der Linearachse 75 weiterbewegt, wodurch der Kulissenfolger in die Absenk-Steuerkulisse 65 eingreift und dort durch die Radial-Steigungsfläche 67 nach unten gezwungen wird, wodurch das Anschlagglied 21 aus der Transportebene 13 herausbewegt wird.

Nach dem Freigeben des Gegenstandes 16 kann dann das Anschlagglied 21 über die zugeordneten Federmittel wieder in die Transportebene hinein und dort in die Anschlagglied-Ausgangsstellung 22 bewegt werden.

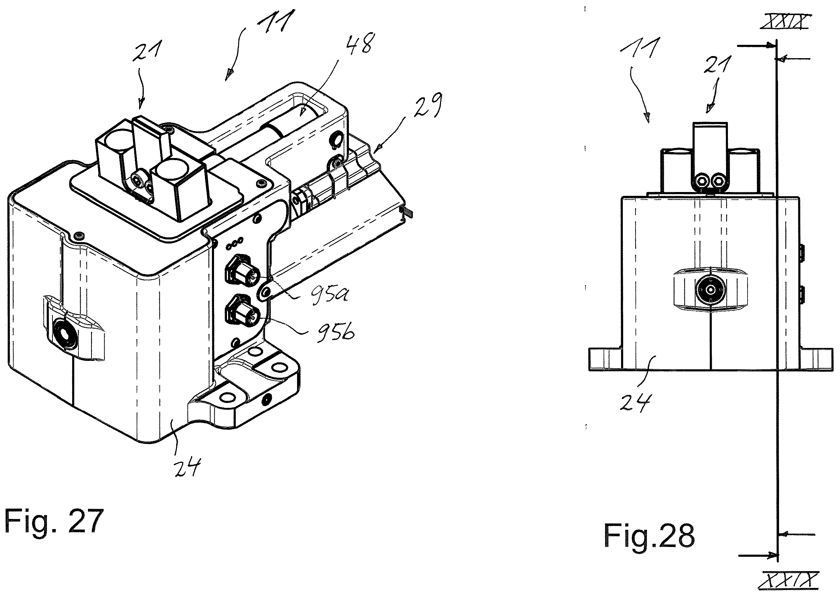

Die Figuren 27 bis 31 zeigen ein drittes Ausführungsbeispiel des erfindungsgemäßen Anschlagmoduls 11. Es unterscheidet sich von den zuvor beschriebenen Ausführungsformen insbesondere durch die andersartige Aktivierung des Stellantriebs 29 und die erweiterte Funktionalität der den Stellantrieb 29 ansteuernden Steuereinheit 72. Der mechanische Aufbau des Anschlagmoduls 11 gemäß drittem Ausführungsbeispiel entspricht im Wesentlichen dem mechanischen Aufbau des ersten Ausführungsbeispiels, so dass hier auf die diesbezügliche Beschreibung Bezug genommen wird. Ein weiterer Unterschied zwischen dem ersten und dritten Ausführungsbeispiel ist, dass das Anschlagmodul gemäß dem dritten Ausführungsbeispiel ein einteiliges Grundgehäuse aufweist, das im Wesentlichen dem Grundkörper 24 entspricht. Ferner ist das Gegen-Steuerelement 51 gemäß drittem Ausführungsbeispiel zweigeteilt und umfasst ein mit der Dämpfungs-Steuerkulisse 58 am mechanischen Steuerelement 50 zusammenwirkendes Wälzlager, insbesondere Kugellager 97, und ein mit der Absenk-Steuerkulisse 65 zusammenwirkenden Steuerstift 98.

Anstelle eines Aufprallsensors, wie insbesondere in Zusammenhang mit dem ersten Ausführungsbeispiel beschrieben, wird hier ein Wegmesssystem 96 verwendet.

Das Wegmesssystem 96 umfasst die Steuereinheit 72, die elektrische Signale von einem Sensor 91 empfangen kann. Der Sensor ist im gezeigten Beispielsfall als Hall-Sensor 91 ausgebildet, insbesondere in Form eines linearen Hall-Sensors 91. Das Wegmesssystem umfasst ferner einen mit dem Hall-Sensor 91 zusammenwirkenden Magneten 93, der im Beispielsfall als Stabmagnet ausgebildet ist.

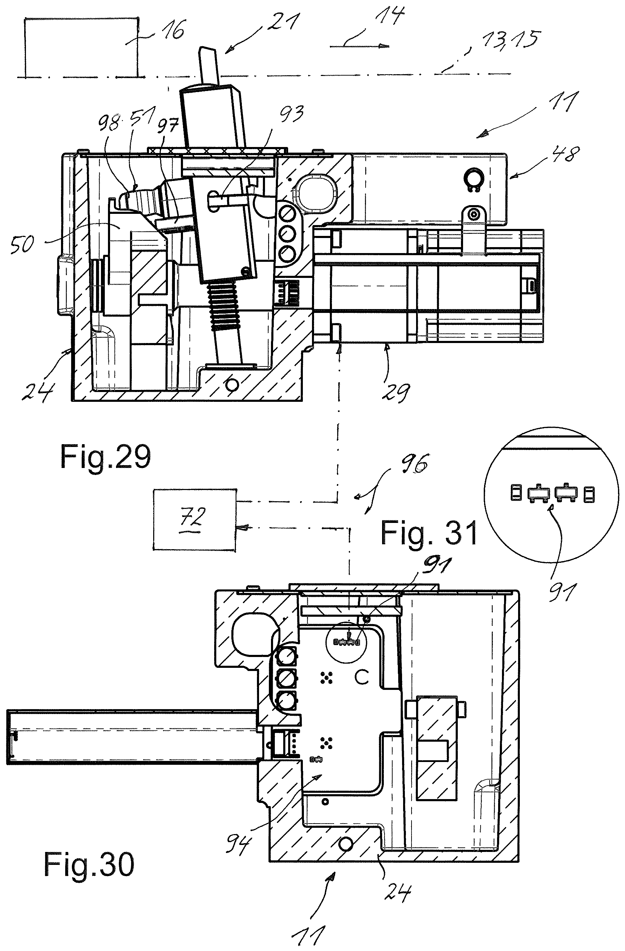

Wie insbesondere in Figur 29 gezeigt, ist der Magnet 93 am Anschlagglied 21 angeordnet und wird durch die vom aufprallenden Gegenstand 16 initiierte Bewegung des Anschlagglieds 21 mit diesem mitbewegt.

Dem Magnet 93 gegenüberliegend ortsfest am Grundkörper 24 angeordnet befindet sich der Hall-Sensor 91, der im gezeigten Beispielsfall aus zwei parallel zur Arbeitsbewegungsrichtung 14 ausgerichtete Sensorteilen besteht. Der Hall-Sensor 91 ist derart angeordnet und ausgerichtet, dass er den kompletten Hub bzw. Dämpfungshub des Anschlagglieds 21 zwischen seiner Anschlagglied-Ausgangsstellung bis hin zur Anschlagglied-Endstellung aufnehmen kann.

Zweckmäßigerweise ist der Hall-Sensor 91 auf einer Steuerungsplatine 94 angeordnet, die wiederum am Grundkörper 24 befestigt ist.

Die Funktionalität des dritten Ausführungsbeispiels lässt sich wie folgt beschreiben:
In der Grundposition, der Anschlagglied-Ausgangsstellung 22, bei dem das freie Ende des Anschlagglieds 21 oben und vorne angeordnet ist, wird aufgrund der Stellung des Magneten 93 zum Hall-Sensor 91 ein bestimmter Wert ausgelesen und an die elektronische Steuereinheit 72 übermittelt.

Sobald sich dieser Wert verändert, fängt der interne Prozessor der Steuereinheit 72, der zweckmäßigerweise ebenfalls auf der Steuerungsplatine 94 sitzt mit der Verarbeitung der Inkrementen-Schritte bezüglich der Zeiterfassung pro Inkrementen-Schritt an.

In den Figuren 29 und 30 ist die Steuereinheit 72 schematisch und der Übersichtlichkeit halber losgelöst vom Anschlagmodul 11 gezeigt, jedoch befinden sich gemäß drittem Ausführungsbeispiel sämtliche Komponenten der Steuereinheit 72 auf der Steuerungsplatine 94, die zwei elektrische Anschlüsse 95a, 95b aufweist, von denen einer für die Aktorik und der andere für die Sensorik vorgesehen ist.

Nach eine bestimmten Teilhub des Anschlagglieds 21, beispielsweise nach ca. 2mm Dämpfungshub, der 40 Inkremente am Sensor entspricht, wird anhand des zurückgelegten Weges und der dafür benötigten Zeit die Geschwindigkeit des Anschlagglieds 21 und somit des Gegenstandes 16, insbesondere Werkstückträgers ermittelt. Ferner wird nach der Zurücklegung dieses initialen Dämpfungshub ein Aktivierungssignal an den Stellantrieb ausgegeben.

Anhand des ermittelten Geschwindigkeitswertes bzw. Ist-Geschwindigkeit, wird ein Bewegungsprofil, insbesondere in Form einer eine Verzögerungskurve errechnet, mit welcher das Anschlagglied 21 in die Endposition gedrückt wird, sollte die Gesamtenergie des Werkstückträgers nicht ausreichend sein, diesen in die Endposition zu bewegen.

Im Normalfall reicht die Gesamtenergie des Gegenstandes 16, insbesondere Werkstückträgers, aus, um das Anschlagglied in die Anschlagglied-Endstellung zu bewegen. Nur für den Fall, dass die Gesamtenergie nicht ausreicht, um das Anschlagglied 21 ohne weitere Unterstützung in die Endstellung zu bewegen, es also vor Erreichen der Endstellung stehen bleiben würde, kommt das mechanische Steuerelement 50 in Kombination mit dem mechanischen Gegen-Steuerelement 51 zum Einsatz. Das Bewegungsprofil gibt dann in Abhängigkeit von Parametern der Bearbeitungs- und Fördereinrichtung beispielsweise der Taktzeit vor auf welche Art und Weise, insbesondere wie schnell das Anschlagglied in die Endstellung bewegt wird.

## Patentansprüche

1. Anschlagmodul, insbesondere für automatische Bearbeitungs- und Fördereinrichtungen, mit einem an einem Grundkörper (24) beweglich gelagerten Anschlagglied (21) für sich in einer Transportebene (13) in einer aktuellen entlang einer Bewegungsachse (15) orientierten Arbeitsbewegungsrichtung (14) bewegende Gegenstände (16), wobei das Anschlagglied (21) mittels einer einen Stellantrieb (29) aufweisenden Stellvorrichtung per Abwärtshub aus der Transportebene (13) heraus und per Aufwärtshub in diese zurückbewegbar ist, und mit einer mit dem Anschlagglied (21) gekoppelten Dämpfungseinrichtung (48) zum Dämpfen des Aufpralls eines Gegenstandes (16) auf das Anschlagglied (21), derart, dass das Anschlagglied (21) beim Aufprall des Gegenstandes (16) aus einer Anschlagglied-Ausgangsstellung (22) heraus in Richtung einer eine Weiterbewegung des Anschlagglieds (21) verhindernden Anschlagglied-Endstellung (49) gedämpft bewegbar ist, **dadurch gekennzeichnet, dass** die Stellvorrichtung ein mit dem Stellantrieb (29) bewegungsgekoppeltes und von diesem angetriebenes mechanisches Steuerelement (50) aufweist, das mit einem am Anschlagglied (21) angeordneten mechanischen Gegen-Steuerelement (51) derart gekoppelt ist, dass beim Aufprall des Gegenstandes (16) der Stellantrieb (29) über Aktivierungsmittel aktivierbar ist und das mechanische Steuerelement (50) veranlasst, eine Steuerbewegung auszuführen, wodurch über den Abgriff mittels des mechanischen Gegen-Steuerelements (51) das Anschlagglied von der Anschlagglied-Ausgangsstellung (22) in die Anschlagglied-Endstellung (49) bewegbar ist.

2. Anschlagmodul nach Anspruch 1, **dadurch gekennzeichnet, dass** mechanisches Steuerelement (50) und mechanisches Gegen-Steuerelement (51) als Steuerbolzen und mit einer Steuerbahn für den Steuerbolzen ausgestattete Dämpfungs-Steuerkulisse (58) ausgebildet sind, wobei vorzugsweise das mechanische Steuerelement (50) die Dämpfungs-Steuerkulisse (58) und das mechanische Gegen-Steuerelement (51) den Steuerbolzen aufweist.

3. Anschlagmodul nach einem der vorhergehenden Ansprüche, **dadurch gekennzeichnet, dass** das mechanische Steuerelement (50) bei Aktivierung des Stellantriebs (29) ausgehend von einer mit der Anschlagglied-Ausgangsstellung (22) korrespondierenden Steuerelement-Grundstellung (60) per Steuerbewegung in eine mit der Anschlagglied-Endstellung (49) korrespondierenden Steuerelement-Dämpfungsendstellung (61) bewegbar ist.

4. Anschlagmodul nach einem der Ansprüche 2 oder 3, **dadurch gekennzeichnet, dass** die Steuerbahn der Dämpfungs-Steuerkulisse (58) als Axial-Steigungsfläche ausgebildet ist, mit einer axial zur Bewegungsachse (15) verlaufenden Steigung, die ausgehend von der Steuerelement-Grundstellung (60) hin zur Steuerelement-Dämpfungsendstellung (61) in Richtung hin zu einer Stützplatte (28) des Grundkörpers (24) ansteigt.

5. Anschlagmodul nach einem der vorhergehenden Ansprüche, **dadurch gekennzeichnet, dass** das mechanische Steuerelement (50) zusätzlich zur Steuerung der Dämpfungsbewegung des Anschlagglieds (21) über Absenk-Steuermittel auch die Steuerung der Absenkbewegung des Anschlagglieds (21) aus der Transportebene (13) heraus übernimmt, wobei vorzugsweise die Absenk-Steuermittel eine Absenk-Steuerkulisse (65) und einen Absenk-Steuerbolzen aufweisen.

6. Anschlagmodul nach einem der Ansprüche 4 oder 5, **dadurch gekennzeichnet, dass** das mechanische Steuerelement (50) als um eine Rotationsachse drehbare Steuerscheibe ausgebildet ist, wobei die Steuerelement-Dämpfungsendstellung (61) ausgehend von der Steuerelement-Grundstellung (60) durch Rotation der Steuerscheibe um einen bestimmten Drehwinkel, beispielsweise um 180°, erreichbar ist, wobei vorzugsweise die Dämpfungs-Steuerkulisse (58) an der Steuerscheibe an einer zum Steuerbolzen (51) hin zugewandten ersten stirnseitigen Scheibenfläche (54) der Steuerscheibe ausgebildet ist.

7. Anschlagmodul nach Anspruch 6, **dadurch gekennzeichnet, dass** die Absenk-Steuermittel durch die Steuerscheibe und den Steuerbolzen gebildet sind, derart, dass die Steuerscheibe ausgehend von der Steuerelement-Dämpfungsendstellung (61) um einen bestimmten Drehwinkel hin zu einer Steuerelement-Absenkendstellung (66) weiterrotierbar ist, wobei bei der Rotation der Steuerbolzen auf einer radial zur Längsachse (30) verlaufenden an der Absenk-Steuerkulisse (65) ausgebildeten Radial-Steigungsfläche (67) entlangführbar ist.

8. Anschlagmodul nach einem der Ansprüche 1 bis 5, **dadurch gekennzeichnet, dass** das mechanische Steuerelement (50) als ein entlang einer quer zur Bewegungsachse (13) ausgerichteten Linearachse (75) verfahrbarer Schlitten (76) ausgebildet ist, an dem die Dämpfungs-Steuerkulisse (58) ausgebildet ist.

9. Anschlagmodul nach einem der vorhergehenden Ansprüche, **dadurch gekennzeichnet, dass** die Aktivierungsmittel wenigstens einen mit dem Anschlagglied gekoppelten Sensor (71) und eine elektronische Steuereinheit (72) aufweisen, wobei die elektronische Steuereinheit (72) dazu geeignet ist, vom Sensor (71) übermittelte Sensorsignale empfangen zu können und Aktivierungssignale zur Aktivierung des Stellantriebs (29) auszugeben.

10. Anschlagmodul nach Anspruch 9, **dadurch gekennzeichnet, dass** der Sensor Bestandteil eines Wegmesssystems (96) ist, wobei mittels des Sensors der Hub des Anschlagglieds (21) zwischen der Anschlagglied-Ausgangsstellung (22) und der Anschlagglied-Endstellung (49) detektierbar ist und nach einem nach dem Aufprall eines Gegenstandes (16) durch das Anschlagglied (21) zurückgelegten und mittels des Sensors detektierbaren Teilhub ein Aktivierungssignal an den Stellantrieb (29) ausgebbar ist.

11. Anschlagmodul nach Anspruch 10, **dadurch gekennzeichnet, dass** die Steuereinheit (72) derart ausgebildet ist, dass aus dem detektierten Teilhub des Anschlagglieds (21) in Kombination mit der Zeit für die Zurücklegung des Teilhubs eine Ist-Geschwindigkeit des Anschlagglied (21) und somit des Gegenstandes (16), insbesondere Werkstückträgers, berechenbar ist, die als Grundlage zum Auslesen, insbesondere zur Berechnung eines Bewegungsprofils für das mechanische Steuerelement (50) dient, das dann gemäß dem abgerufenen Bewegungsprofil antreibbar ist.

12. Anschlagmodul nach einem der Ansprüche 9 bis 11, **dadurch gekennzeichnet, dass** der wenigstens eine Sensor als Hall-Sensor (91), vorzugsweise linearer Hall-Sensor (91), ausgebildet ist, der mit einem Magneten (93), vorzugsweise Stabmagneten, zur Erzeugung des durch den Hall-Sensor (91) detektierbaren Magnetfelds zusammenwirkt, wobei insbesondere der Magnet (93), insbesondere Stabmagnet, am Anschlagglied (21) angeordnet und der Hall-Sensor (91) ortsfest am Grundkörper (24) angeordnet ist.

13. Anschlagmodul nach einem der vorhergehenden Ansprüche, **dadurch gekennzeichnet, dass** der Stellantrieb (29) als elektrischer oder fluidischer Stellantrieb, vorzugsweise Elektromotor, insbesondere Getriebe-Schrittmotor, ausgebildet ist.

14. Anschlagmodul nach einem der vorhergehenden Ansprüche, **dadurch gekennzeichnet, dass** dem Anschlagglied (21) erste Federmittel (64) zur Vorspannung des Anschlagglieds (21) in die Anschlaglied-Ausgangsstellung (22) zugeordnet sind, wobei vorzugsweise die Federmittel (64) Bestandteile der Dämpfungseinrichtung (48) sind, insbesondere in den Stoßdämpfer (62) integriert sind, wobei vorzugsweise dem Anschlagglied (21) zweite entgegen des Abwärtshubs wirkende Federmittel (45) zur Vorspannung des Anschlagglied (21) in die in die Transportebene (13) hineinragende Anschlagglied-Ausgangsstellung (22) zugeordnet sind.

15. Anschlagmodul nach einem der vorhergehenden Ansprüche, **dadurch gekennzeichnet, dass** das Anschlagglied (21) mittels eines Schwenklagers um eine Schwenkachse (36) zwischen der Anschlagglied-Ausgangsstellung (22) und der Anschlagglied-Endstellung (49) schwenkbar am Grundkörper (24) gelagert ist.
